# EUROPÄISCHE PATENTANMELDUNG

(11) **EP 2 293 399 A2**
(43) Veröffentlichungstag der Anmeldung: **09.03.2011**
(21) Anmeldenummer: 10008911.9
(22) Anmeldetag: 27.08.2010
(51) Int. Cl.: H02G 3/12, H02G 3/16

(54) **Unterputz-Steckdose**

(30) Priorität: 05.09.2009 DE 102009040308
(71) Anmelder: ABB AG, 68309 Mannheim (DE)
(72) Erfinder: Sahlmann, Hans-Peter, 58454 Witten (DE); Schulte-Lippern, Günter, Dipl.-Ing., 58513 Lüdenscheid (DE)

(57) **Zusammenfassung**

Es wird eine Unterputz-Steckdose (1) mit einem Steckdosensockel (12) vorgeschlagen, welcher unter Zwischenfügung eines Abdeckrahmens (3) über eine Zentralschraube (28) mit einem Steckdosentopf (23) verbunden ist. Von Wichtigkeit ist,
• dass der Abdeckrahmen (3) an seiner Rückseite mit mehreren Klemmfedern (6) versehen ist,
• dass der Tragring (13) des Steckdosensockels mit Führungsflächen (16) zur Führung dieser Klemmfedern (6) versehen ist,
• dass die Zentralausnehmung (4) des Abdeckrahmens randseitig mit mehreren Podesten (5) versehen ist,
• dass der Steckdosentopf (23) an seiner umlaufenden Stirnfläche mit Ausnehmungen (26) zum Eingriff dieser Podeste (5) versehen ist, wobei diese Ausnehmungen (26) zur Rückseite respektive zum Steckdosensockel (12) hin offen sind und zur Frontseite hin Anschlagflächen (27) für die Podeste (5) bilden,
• dass der Tragring (13) des Steckdosensockels (12) eine definierte Anschlagfläche (22) zur Rückseite des Abdeckrahmens (3) hin aufweist,
• so dass der aus Steckdosensockel und Steckdosentopf gebildete Steckdoseneinsatz (12 + 23) gegenüber dem Abdeckrahmen (3) schwimmend gelagert ist, wobei ein definierter Bewegungsspielraum zwischen den beiden Anschlagflächen (22, 27) gegeben ist und die Federkraft der Klemmfedern (6) den Tragring (13) in Richtung zur Rückseite des Abdeckrahmens (3) hin presst.

## Beschreibung

Die Erfindung betrifft eine Unterputz-Steckdose mit einem einen Tragring aufweisenden Steckdosensockel, welcher unter Zwischenfügung eines eine Zentralausnehmung aufweisenden Abdeckrahmens über eine Zentralschraube mit einem Steckdosentopf verbunden ist, wobei Steckdosensockel und Steckdosentopf einen Steckdoseneinsatz bilden.

Es ist allgemein bekannt, Unterputz-Steckdosen aus den Komponenten Steckdosensockel, Steckdosentopf und Abdeckrahmen zusammenzusetzen, wobei der Abdeckrahmen in Form eines Einfachrahmens, eines Zweifachrahmens, eines Dreifachrahmens, usw. - allgemein eines Mehrfachrahmens - ausgebildet sein kann, um derart eine Kombination einer Steckdose mit einem Schalter und *l* oder Taster und *l* oder Drehdimmer und / oder Tastdimmer und / oder Raumtemperaturregler usw. - allgemein einem Installationsgerät mit Elektronikbauteilen - realisieren zu können.

Aus der EP 1 993 180 A2 ist eine Sensoreinheit zur Montage in einer Installationsdose bekannt, bei der ein einheitlicher, mehrfach in Feldern untergliederter Grundträger vorgesehen ist, der mindestens ein Feld zur Aufnahme eines Bedien- oder Funktionselementes aufweist, wie z. B. Einfach-Taster, Mehrfach-Taster. Drehelement, Dreh-Drückelement, Joystick, Display, Touchscreen, Lautsprecher, Mikrofon. Dabei kann eine direkte Montage einer Steckdose am Grundträger durch Eingriff von Rasthaken der Steckdose in Führungselemente des Grundträgers erfolgen. Die Führungselemente dienen ferner zur Montage von endseitigen Abschlussdeckleisten.

Bei Kombination einer Steckdose mit mindestens einem weiteren Bedien- oder Funktionselement respektive einem Instaflationsgerät mit Elektronikbauteilen ergibt sich stets das Problem, dass z. B. infolge von Wandunebenheiten durch die Steckdosenverschraubung bedingte mechanische Spannungen auf das mindestens eine weitere Bedien- oder Funktionselement übertragen werden.

Der Erfindung liegt die Aufgabe zugrunde, eine Unterputz-Steckdose der eingangs genannten Art anzugeben, welche eine nahezu spannungsfreie Steckdosenverschraubung ermöglicht.

Diese Aufgabe wird erfindungsgemäß gelöst durch eine Unterputz-Steckdose mit einem einen Tragring aufweisenden Steckdosensockel, welcher unter Zwischenfügung eines eine Zentralausnehmung aufweisenden Abdeckrahmens über eine Zentralschraube mit einem Steckdosentopf verbunden ist, wobei Steckdosensockel und Steckdosentopf einen Steckdoseneinsatz bilden,
- wobei der Abdeckrahmen an seiner Rückseite mit mehreren Klemmfedern versehen ist,
- wobei der Tragring mit Führungsflächen zur Führung dieser Klemmfedern versehen ist,
- wobei die Zentralausnehmung randseitig mit mehreren Podesten versehen ist,
- wobei der Steckdosentopf an seiner umlaufenden Stimfläche mit Ausnehmungen zum Eingriff dieser Podeste versehen ist, wobei diese Ausnehmungen zur Rückseite respektive zum Steckdosensockel hin offen sind und zur Frontseite hin Anschlagflächen für die Podeste bilden,
- wobei der Tragring des Steckdosensockels eine definierte Anschlagfläche zur Rückseite des Abdeckrahmens hin aufweist,
- so dass der Steckdoseneinsatz gegenüber dem Abdeckrahmen schwimmend gelagert ist, wobei ein definierter Bewegungsspielraum zwischen den beiden Anschlagflächen gegeben ist und die Federkraft der Klemmfedern den Tragring in Richtung zur Rückseite des Abdeckrahmens hin presst.

Die mit der Erfindung erzielbaren Vorteile bestehen insbesondere darin, dass durch das Anziehen der Zentralschraube bei der mechanischen Verbindung zwischen Steckdosentopf und Steckdosensockel keine mechanische Spannungen auf den Abdeckrahmen übertragen werden. Dies ist insbesondere dann von großem Vorteil,
- wenn der Abdeckrahmen mit einer Echtmaterial-Platte, z. B. aus Edelstahl oder Glas oder Keramik, belegt ist,
- wenn eine senkrechte oder waagrechte Aneinanderreihung / Verbindung des Abdeckrahmen der Unterputz-Steckdose mit weiteren Abdeckrahmen weiterer Installationsgeräte in beliebiger Anzahl, insbesondere solcher mit Elektronikbauteilen vorliegt. Mehrfachrahmen in unterschiedlicher Ausgestaltung (zweifach, dreifach usw.) sind nicht erforderlich.

Beim Anziehen der Zentralschraube der Steckdose werden keine mechanischen Spannungen, weder an die Echtmaterial-Platte noch an die Elektronikbauteile benachbarter Installationsgeräte, weitergegeben. Es ist ein Wandausgleich (d. h. ein Ausgleich von Unebenheiten der Wand), z. B. von 2 mm, möglich,

Zweckmäßige Ausgestaltungen der Erfindung sind in den Unteransprüchen gekennzeichnet.

So kann eine aus Edelstahl oder Glas oder Keramik bestehende Echtmaterial-Platte auf dem Abdeckrahmen befestigt sein.

Die Klemmfedern können aus Federmetall bestehen und als Einlegeteile an der Rückseite des Abdeckrahmens befestigt sein. Alternativ hierzu können die Klemmfedern aus dem Trägermaterial des Abdeckrahmens gebildet und direkt an dessen Rückseite angeformt sein.

Die Klemmfedern können freie, nach innen (zur Mitte der Zentralausnehmung hin) abgebogene Klemmfeder-Enden aufweisen, welche während des Aufdrückens des Abdeckrahmens gegen den Steckdosensockel auf Führungsschrägflächen des Tragringers aufsitzen und dort geführt werden.

Der Abdeckrahmen kann an seinen Stirnseiten mit Befestigungsmitteln zur Befestigung eines korrespondierenden Befestigungsmittels eines weiteren Abdeckrahmens eines weiteren Installationsgerätes oder einer endseitigen Abschlussdeckleiste versehen sein.

Die Erfindung wird nachstehend an Hand der in der Zeichnung dargestellten Ausführungsbeispiele erläutert. Es zeigen:
- Fig. 1: eine perspektivische Ansicht einer Unterputz-Steckdose in Form einer Explosionszeichnung,
- Fig. 2: eine perspektivische Sicht auf die Frontseite eines Abdeckrahmens der Unterputz-Steckdose,
- Fig. 3: eine perspektivische Sicht auf die Rückseite eines Abdeckrahmens der Unterputz-Steckdose,
- Fig. 4: eine perspektivische Sicht auf einen Steckdosensockel,
- Fig. 5: eine Sicht auf die Frontseite einer Unterputz-Steckdose,
- Fig. 6, 7: zwei unterschiedliche Seitenansichten der Unterputz-Steckdose.

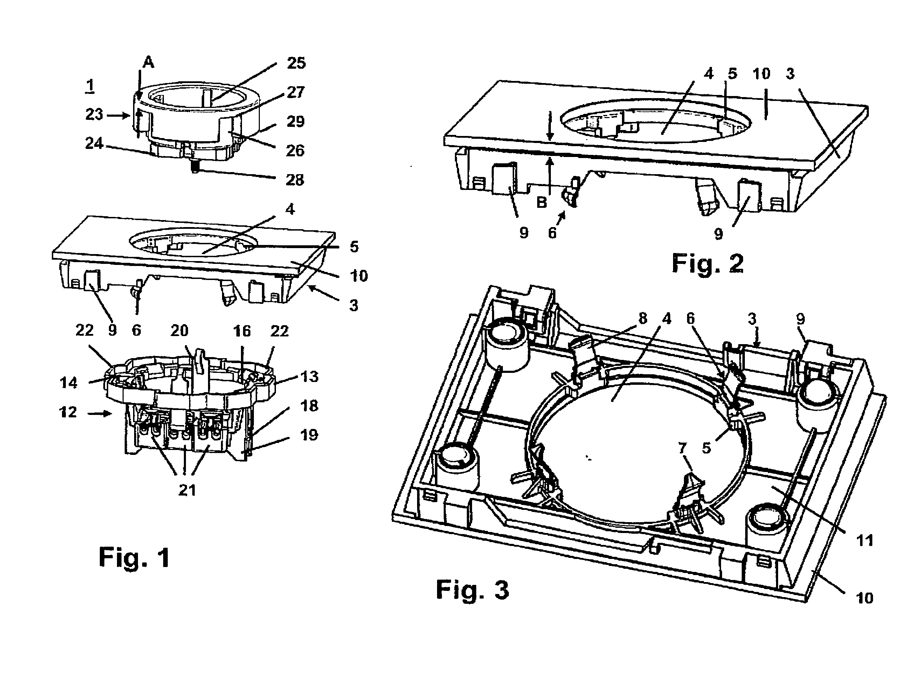

In Fig. 1 ist eine perspektivische Ansicht einer Unterputz-Steckdose in Form einer Explosionszeichnung dargestellt. Die Unterputz-Steckdose 1 besteht aus einem Abdeckrahmen 3, einem Steckdosensockel 12 und einem Steckdosentopf 23 als Hauptkomponenten, wobei Steckdosensockel 12 und Steckdosentopf 23 zusammen einen Steckdosen-Einsatz 12 + 23 bilden, wie allgemein bekannt.

Der Abdeckrahmen 3 weist eine Zentralausnehmung 4 zur Aufnahme des Steckdosentopfes 23 auf, wobei mehrere, vorzugsweise vier in gleichmäßiger (symmetrischer) Weise angeordnete Podeste 5 in den von der Zentralausnehmung 4 gebildeten Innenraum ragen. An der Rückseite des Abdeckrahmens 3 sind mehrere, vorzugsweise vier in gleichmäßiger (symmetrischer) Weise angeordnete Klemmfedern 6 angeordnet. An der Frontseite des Abdeckrahmens 3 ist eine Echtmaterial-Platte 10 befestigt, beispielsweise eine Platte aus Edelstahl, Glas oder Keramik. Die Echtmateriel-Platte 10 weist ebenfalls eine Zentralausnehmung auf, welche der Zentralausnehmung 4 des Abdeckrahmens 3 entspricht.

An mindestens einer Stirnseite des Abdeckrahmens 3 befindet sich mindestens ein Befestigungsmittel 9, z. B. eine Aufnahmenut, zur Befestigung eines korrespondierenden Befestigungsmittels, z. B. eines Aufnahmesteges, eines weiteren Abdeckrahmens eines weiteren Installationsgerätes (mit Elektronikbauteilen) oder einer endseitigen Abschlussdeckleiste. Vorzugsweise sind jeweils zwei Befestigungsmittel 9 an zwei sich gegenüberliegenden Stirnseiten des Abdeckrahmens 3 vorhanden.

Der Körper des Steckdosensockels 12 besteht vorzugsweise vollständig aus einem elektrisch isolierenden Kunststoff und weist insbesondere auch einen Tragring 13 aus Kunststoff auf, welcher in allgemein bekannter Art und Weise mit mehreren Befestigungsbohrungen 14 versehen ist, wodurch eine potentialfreie Montage des Steckdosensockels in einer handelsüblichen UP-Gerätedose ermöglicht wird. Die Oberkante des Tragrings 13 bildet eine definierte Anschlagfläche 22 zur Rückseite des Abdeckrahmens 3 hin. Für eine gleitende Längsbewegung respektive Führung der Klemmfedern 6 weist der Tragring Führungsflächen 16 auf.

Zwei sich gegenüberliegend am Steckdosensockel 12 beweglich befestigte metallene Spreizen 18 werden in der Ruheposition (d. h. bei nicht montiertem Zustand) per Federkraft in einen nischenartigen, ebenfalls aus Kunststoff gebildeten Spreizen-Schutz 19 gedrückt. Ferner besitzt der Steckdosensockel 12 in allgemein bekannter Art und Weise Anschlussklemmen 21 für Phase, Nullleiter und Schutzleiter eines Wechselspannungsnetzes sowie Erdungsbügel 20.

Der ebenfalls aus einem elektrisch isolierenden Kunststoff gebildete Steckdosentopf 23 weist Ausnehmungen 25 zum Durchgriff der Erdungsbügel 20 auf und ist an seiner Rückseite mit einem erhöhten Berührungsschutz 24 versehen, welcher mittels eines federbelasteten Schiebers die Eingriffsbohrungen des Steckdosentopfes 23 für einen Stecker bei missbräuchlichen Nutzungsversuchen (z. B. Einführen eines Drahtes) abdeckt. An der Rückseite ist der Gewindeabschnitt einer Zentralschraube 28 zu erkennen, welche zur Verschraubung mit einem entsprechenden, zentral angeordneten Gewinde des Steckdosensockels 12 dient.

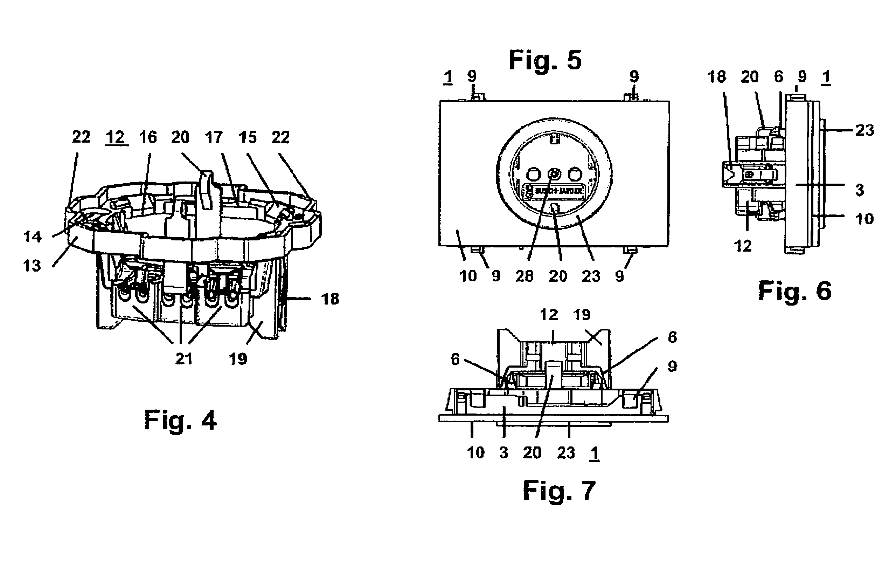

An seiner umlaufenden Stirnfläche ist der Steckdosentopf 23 mit mehreren, vorzugsweise vier in gleichmäßiger (symmetrischer) Weise angeordneten Ausnehmungen 26 versehen, welche zur Rückseite hin (in Richtung zum Steckdosensockel) geöffnet sind und zur Frontseite hin jeweils Anschlagflächen 27 aufweisen. Der Abstand zwischen der Frontseite des Steckdosentopfes 23 und der Anschlagfläche 27 ist mit A bezeichnet. Der Außendurchmesser des Steckdosentopfes 23 entspricht ungefähr dem Durchmesser der Zentralausnehmung 4 (d. h. er ist geringfügig kleiner). Eine Unterkante 29 des Steckdosentopfes 23 dient zum definierten Aufsetzen auf den Tragring 13 des Steckdosensockels 12. Einzelheiten hierzu sind unter Fig. 4 erläutert.

In Fig. 2 ist eine perspektivische Sicht auf die Frontseite eines Abdeckrahmens der Unterputz-Steckdose dargestellt. Es sind die auf dem Abdeckrahmen 3 befestigte, z. B. aufgeklebte Echtmaterial-Platte 10, die Zentralausnehmung 4 mit den Podesten 5 des Abdeckrahmens 3, die stirnseitigen Befestigungsmittel 9 und die zur Rückseite weisenden Klemmfedern 6 zu erkennen. Die Dicke (Stärke) der Echtmaterial-Platte 10 ist mit B bezeichnet. Vorzugsweise ist der Abstand A zwischen der Frontseite des Steckdosentopfes 23 und der Anschlagfläche 27 gleich der Dicke B der Echtmaterial-Platte 10.

In Fig. 3 ist eine perspektivische Sicht auf die Rückseite eines Abdeckrahmens der Unterputz-Steckdose dargestellt. Es ist die in der Grundplatte 11 des Abdeckrahmens 3 sowie in der Echtmaterial-Platte 10 vorhandene Ausnehmung 4 mit den in die Zentralausnehmung 4 ragenden, randseitigen Podesten 5 der Grundplatte 11 zu erkennen, wobei die Tiefe und die Breite der Podeste 5 geringer sind als die Tiefe und die Breite der Ausnehmungen 25 des Steckdosentopfes 23 ist, um ein Eingreifen der Podeste 5 in die Ausnehmungen 26 zu ermöglichen. Die Podeste 5 dienen vorzugsweise auch zum Befestigen der ersten Enden der Klemmfedern 6. Die jeweils zweiten Enden der Klemmfedern 6, nachfolgend als freie Klemmfeder-Enden 7 bezeichnet, sind abgebogen und zur Mitte der Zentralausnehmung 4 hin gerichtet. Zwisehen diesen freien Klemmfeder-Enden 7 und den Podesten 5 weisen die Klemmfedern 6 jeweils Klemmfeder-Mittelschenkel 8 auf.

Fig. 3 zeigt ferner die vorzugsweise vier Befestigungsmittel 9 für die Befestigung weiterer Abdeckrahmen weiterer Installationsgeräte oder für die Befestigung von Abschlussdeckleisten.

In Fig. 3 ist eine Ausführungsform mit aus einem Federstahl gebildeten Klemmfedern 6 gezeigt, welche als Einlegeteile am Abdeckrahmen 3 (in den Podesten) befestigt sind. Alternativ hierzu können die Klemmfedern 6 auch aus dem Kunststoffmaterial des Abdeckrahmens bestehen und direkt an der Rückseite der Grundplatte 11 angeformt sein.

In Fig. 4 ist eine perspektivische Sicht auf einen Steckdosensockel dargestellt. Es sind der Tragring 13, die vorzugsweise vier, in symmetrischer Weise angeordneten Befestigungsbohrungen 14, die Spreizen 18, der Spreizen-Schutz 19, die Erdungsbügel 20 des Steckdosensockels 12 und die Anschlussklemmen 21 zu erkennen. Von Wichtigkeit sind folgende Ausbildungen des Tragringes 13:
- Die Oberkante des Tragrings 13 bildet eine definierte Anschlagfläche 22 zur Rückseite des Abdeckrahmens 3 hin.
- Der Tragring 13 bildet mehrere Auflageflächen 17 zum definierten Aufsetzen (Anschlag) der Unterkante 29 des Steckdosentopfes 23.
- Der Tragring 13 besitzt mehrere, vorzugsweise vier Führungsschrägflächen 15 zum Aufsetzen der freien Klemmfeder-Enden 7.
- In Richtung zum Innenraum des Tragrings 13 gehen die Führungsschrägflächen 15 in Führungs-Flächen 16 zur Auflage und Führung der Klemmfeder-Mittelschenkel 8 über.

In Fig. 5 ist eine Sicht auf die Frontseite einer Unterputz-Steckdose dargestellt. Es sind die Befestigungsmittel 9, Echtmaterial-Platte 10, der Steckdosentopf 23, die Zentralschraube 28 und die Erdungsbügel 20 zu erkennen.

In Fig. 6, 7 sind zwei unterschiedliche Seitenansichten der Unterputz-Steckdose dargestellt (gegeneinander um 90° gedreht). Es sind
- der Abdeckrahmen 3 mit den Klemmfedern 6, den Befestigungsmitteln 9 und der Echtmaterial-Platte 10,
- der Steckdosensockel 12 mit Spreizen 18, Spreizen-Schutz 19 und Erdungsbügel 20,
- der Ober die Echtmaterial-Platte 10 ragende Steckdosentopf 23
zu erkennen. Dabei ergibt sich eine schwimmende Lagerung der über die Zentralschraube 28 miteinander verbundenen Hauptkomponenten Steckdosensockel 12 / Steckdosentopf 23 gegenüber dem Abdeckrahmen 3 mit Echtmaterial-Platte 10.

Die Montage der Unterputz-Steckdose ist wie folgt:
- In einem ersten Schritt wird der Steckdosensockel 12 in einer UP-Gerätedose montiert, wobei die Montage entweder über die Spreizen 18 oder mittels durch die Befestigungsbohrungen 14 greifenden Schrauben erfolgt.
- In einem zweiten Schritt wird der der Abdeckrahmen 3 am Steckdosensockel 12 befestigt, wozu die freien Klemmfeder-Enden 7 auf die Führungsschrägflächen 15 aufgesetzt werden. Beim Anpressen des Abdeckrahmens 3 gegen den Steckdosensockel 12 gleiten die freien Klemmfeder-Enden 7 zunächst entlang der Führungsschrägflächen 15 und werden hierdurch in Richtung Mitte der Zentralausnehmung 4 gedrückt sowie anschließend entlang der Führungsflächen 16. Sobald die freien Klemmfeder-Enden 7 das Ende der Führungsflächen 16 überschreiten, federn sie zurück und die Klemmfeder-Mittelschenkel 8 drücken gegen die Führungsflächen 16, d. h. durch die Federkraft der Klemmfedern 6 wird der Abdeckrahmen 3 In Richtung zum Steckdosensockel 12 gezogen, bis die Anschlagfläche 22 des Tragrings 13 an die Rückseite des Abdeckrahmens 3 anschlägt.
- In einem dritten Schritt wird der Steckdosentopf 23 durch die Zentralausnehmung 4 geführt, wobei die Erdungsbügel 20 durch die Ausnehmungen 25 gleiten. Abschließend wird die Zentralschraube 28 in das korrespondierende Gewinde im Steckdosensockel 12 eingeschraubt und angezogen.

Es ergibt sich die gewünschte schwimmende Lagerung des Steckdoseneinsatz 12 + 23 gegenüber dem Abdeckrahmen 3, wobei eine federbelastete Relativbewegung zwischen Steckdoseneinsatz und Abdeckrahmen ermöglicht wird, bei welcher mittels der Federkraft der Klemmfedern 6 der Tragring 13 in Richtung zur Rückseite des Abdeckrahmens 3 hin gepresst wird. Die Relativbewegung wird durch die beiden Anschlagflächen 22, 27 begrenzt. Hierdurch wird ein Wandausgleich bei Vorliegen einer unebenen Wandfläche erzielt, was insbesondere auch bei Aneinanderreihung mehrerer, über die Befestigungsmittel-Konfiguration, z. B. Aufnahmenuten- / Aufnahmestege - Konfigurationen, miteinander verbundenen Abdeckrahmen respektive Installationsgeräte nebeneinander von Vorteil ist, da hierdurch eine nahezu spannungsfreie Verbindung der Komponenten bei Aneinanderreihung erzielt wird. Insbesondere werden die mechanischen Kräfte der Steckdosenverschraubung nicht an Installationsgeräte mit Elektronikbauteilen (Bedien- oder Funktionselemente wie Mehrfach-Taster, Drehelemente, Dreh-Drückelemente, Display, Touchscreen usw.) weitergegeben.

### Bezugszeichenliste

- 1: Unterputz-Steckdose
- 2: -
- 3: Abdeckrahmen
- 4: Zentralausnehmung
- 5: Podeste zur Führung des Steckdosentopfes 23
- 6: Klemmfedern (entweder direkt aus Trägermaterial angeformt oder Ein- legeteile aus Federmetall)
- 7: freie Klemmfeder-Enden, abgebogen und nach innen gerichtet
- 8: Klemmfeder-Mittelschenkel
- 9: Befestigungsmittel (z. B. Aufnahmenut) für ein korrespondierendes Be- festigungsmittel (z. B. Aufnahmesteg) eines weiteren Abdeckrahmens eines weiteren Installationsgeräts oder einer endseitigen Abschluss- deckleiste
- 10: Echtmaterial-Platte (Edelstahl, Glas, Keramik), vorzugsweise aufge- klebt
- 11: Grundplatte des Abdeckrahmens 3
- 12: Steckdosensockel
- 13: Tragring (potentialfrei)
- 14: Befestigungsbohrungen im Tragring 13
- 15: Führungsschrägflächen zum Aufsetzen der freien Klemmfeder-Enden 7
- 16: Führungsflächen zur Führung der Klemmfeder-Mittelschenkel 8
- 17: Auflagefläche für Steckdosentopf 23
- 18: Spreizen (potentialfrei)
- 19: Spreizen-Schutz
- 20: Erdungsbügel
- 21: Anschlussklemmen für Phase, Nulleiter und Schutzleiter
- 22: Anschlagfläche zur Rückseite des Abdeckrahmens 3 hin
- 23: Steckdosentopf
- 24: erhöhter Berührungsschutz
- 25: Ausnehmungen zum Durchgriff der Erdungsbügel 20
- 26: Ausnehmungen für den Eingriff der Podeste 5
- 27: Anschlagflächen für die Podeste 5
- 28: Zentralschraube
- 29: Unterkante des Steckdosentopfes 23

- A: Abstand zwischen der Frontseite des Steckdosentopfes 23 und den Anschlagflächen 27
- B: Dicke der Echtmaterial-Platte 10

## Patentansprüche

1. Unterputz-Steckdose (1) mit einem einen Tragring (13) aufweisenden Steckdosensockel (12), welcher unter Zwischenfügung eines eine Zentralausnehmung (4) aufweisenden Abdeckrahmens (3) über eine Zentralschraube (28) mit einem Steckdosentopf (23) verbunden ist, wobei Steckdosensockel (12) und Steckdosentopf (23) einen Steckdoseneinsatz (12 + 23) bilden, **dadurch gekennzeichnet,**
• **dass** der Abdeckrahmen (3) an seiner Rückseite mit mehreren Klemmfedern (6) versehen ist,
• **dass** der Tragring (13) mit Führungsflächen (16) zur Führung dieser Klemmfedern (6) versehen ist,
• **dass** die Zentralausnehmung (4) randseitig mit mehreren Podesten (5) versehen ist,
• **dass** der Steckdosentopf (23) an seiner umlaufenden Stirnfläche mit Ausnehmungen (26) zum Eingriff dieser Podeste (5) versehen ist, wobei diese Ausnehmungen (26) zur Rückseite respektive zum Steckdosensockel (12) hin offen sind und zur Frontseite hin Anschlagflächen (27) für die Podeste (5) bilden,
• **dass** der Tragring (13) des Steckdosensockels (12) eine definierte Anschlagfläche (22) zur Rückseite des Abdeckrahmens (3) hin aufweist,
• so dass der Steckdoseneinsatz (12 + 23) gegenüber dem Abdeckrahmen (3) schwimmend gelagert ist, wobei ein definierter Bewegungsspielraum zwischen den beiden Anschlagflächen (22, 27) gegeben ist und die Federkraft der Klemmfedern (6) den Tragring (13) in Richtung zur Rückseite des Abdeckrahmens (3) hin presst.

2. Unterputz-Steckdose (1) nach Anspruch 1, **dadurch gekennzeichnet, dass** eine Echtmaterial-Platte (10) auf dem Abdeckrahmen (3) befestigt ist.

3. Unterputz-Steckdose (1) nach Anspruch 1 oder 2, **dadurch gekennzeichnet, dass** die Klemmfedern (6) aus Federmetall bestehen und als Einlegeteile an der Rückseite des Abdeckrahmens (3) befestigt sind.

4. Unterputz-Steckdose (1) nach Anspruch 1 oder 2, **dadurch gekennzeichnet, dass** die Klemmfedern (6) aus dem Trägermaterial des Abdeckrahmens (3) gebildet und direkt an dessen Rückseite angeformt sind.

5. Unterputz-Steckdose (1) nach einem der vorstehenden Ansprüche, **dadurch gekennzeichnet, dass** die die Klemmfedern (6) freie, nach innen abgebogene Klemmfeder-Enden (7) aufweisen, welche während des Aufdrückens des Abdeckrahmens (3) gegen den Steckdosensockel (12) auf Führungsschrägflächen (15) des Tragringers (13) aufsitzen und dort geführt werden.

6. Unterputz-Steckdose (1) nach einem der vorstehenden Ansprüche, **dadurch gekennzeichnet, dass** der Abdeckrahmen (3) an seinen Stirnseiten mit Befestigungsmitteln (9) zur Befestigung eines korrespondierenden Befestigungsmittels eines weiteren Abdeckrahmens eines weiteren Installationsgerätes oder einer endseitigen Abschlussdeckleiste versehen ist.
